# EUROPÄISCHE PATENTSCHRIFT

(11) **EP 1 425 509 B1**
(45) Veröffentlichungstag und Bekanntmachung des Hinweises auf die Patenterteilung: **27.04.2005**
(21) Anmeldenummer: 02769875.2
(22) Anmeldetag: 14.08.2002
(51) Int. Cl.: F02M 61/14, F02M 55/00

(54) **AUSRICHTELEMENT**
POSITIONING ELEMENT
ELEMENT D'AJUSTAGE

(30) Priorität: 20.08.2001 DE 10140794
(43) Veröffentlichungstag der Anmeldung: 09.06.2004
(73) Patentinhaber: ROBERT BOSCH GMBH, 70442 Stuttgart (DE)
(72) Erfinder: POHLMANN, Jens, 74321 Bietigheim-Bissingen (DE); LAUTER, Stefan, 71679 Asperg (DE)
(74) Vertreter: Körfer, Thomas
(86) Internationale Anmeldenummer: PCT/DE2002/002973
(87) Internationale Veröffentlichungsnummer: WO 2003/018998

(56) Entgegenhaltungen:
- EP-A- 1 001 161
- WO-A-00/36295
- WO-A-02/075147

## Beschreibung

### Stand der Technik

Die Erfindung geht aus von einem Ausrichtelement zur Sicherung eines in einem Zylinderkopf einer Brennkraftmaschine montierten Brennstoffeinspritzventils gegen Verdrehen nach der Gattung des Hauptanspruchs.

Brennstoffeinspritzventile zur direkten Einspritzung von Brennstoff in den Brennraum einer gemischverdichtenden, fremdgezündeten Brennkraftmaschine werden gewöhnlich mittels einer Spannpratze, die mit dem Zylinderkopf der Brennkraftmaschine verschraubt ist, im Zylinderkopf niedergehalten. Eine solche Spannpratze geht beispielsweise aus der JP-08-31 25 03 A hervor. Die Spannpratze drückt dabei auf eine Schulter des Brennstoffeinspritzventils und hält dieses dadurch in der Aufnahmebohrung des Zylinderkopfes fest. Die Spannpratze wird mittels eines entsprechenden Werkzeuges, z. B. eines Drehmomentschlüssels, so fest angezogen, daß das Brennstoffeinspritzventil nicht durch den im Brennraum der Brennkraftmaschine herrschenden Druck aus dem Zylinderkopf herausgedrückt werden kann.

Nachteilig an der aus der JP-08-31 25 03 A bekannten Befestigungsvorrichtung ist insbesondere die mangelnde Sicherung des durch die Befestigungsvorrichtung niedergehaltenen Brennstoffeinspritzventils gegen ein Verdrehen im Zylinderkopf. Durch die beim Betrieb der Brennkraftmaschine auftretenden Vibrationen kann sich das Brennstoffeinspritzventil in seiner Einbaulage relativ zum Zylinderkopf verdrehen, wodurch es beispielsweise zu einer Beschädigung der zur Betätigung des Brennstoffeinspritzventils benötigten elektrischen Kabelverbindungen und der an dem Brennstoffeinspritzventil angeflanschten Brennstoffverteilerleitung kommen kann. Nachfolgende Fehlfunktionen können zu Schäden am Brennstoffeinspritzventil sowie der gesamten Brennkraftmaschine führen.

### Vorteile der Erfindung

Das erfindungsgemäße Ausrichtelement für ein Brennstoffeinspritzventil mit den kennzeichnenden Merkmalen des Hauptanspruchs hat demgegenüber den Vorteil, daß das Brennstoffeinspritzventil durch ein über einen Zapfen mit dem Brennstoffeinspritzventil mittels Einrasten verbindbares Ausrichtelement so fixiert wird, daß ein Verdrehen des Brennstoffeinspritzventils in seiner Einbaulage verhindert wird und demzufolge keine Schäden infolge abgescherter Kabel oder Verteilerleitungen auftreten können.

Durch die in den Unteransprüchen aufgeführten Maßnahmen sind vorteilhafte Weiterbildungen und Verbesserungen des im Hauptanspruch angegebenen Ausrichtelements möglich.

Von Vorteil ist insbesondere, daß das Ausrichtelement mit einer Lasche versehen ist, die als Hebelarm zur zuverlässigen Sicherung zwischen dem Brennstoffeinspritzventil und beispielsweise einem Dorn einer Befestigungsvorrichtung eingespannt ist. Der Dorn kann die Lasche auch durch eine Öffnung durchgreifen.

Vorteilhafterweise ist das Ausrichtelement einteilig mittels Stanzen und Biegen aus Blech hergestellt, wodurch es gute Elastizitätseigenschaften zeigt, welche zum Einrasten am Brennstoffeinspritzventil nötig sind.

Von Vorteil ist weiterhin, daß das Ausrichtelement in einfacher Weise ohne zusätzliche Bauteile zwischen dem Brennstoffeinspritzventil und dem Dorn der Befestigungsvorrichtung montierbar ist.

Der Oberbegriff des Anspruchs 1 ist auch aus der EP-A- 1 001 161 bekannt.

### Zeichnung

Ein Ausführungsbeispiel der Erfindung ist in der Zeichnung vereinfacht dargestellt und in der nachfolgenden Beschreibung näher erläutert. Es zeigen:
- Fig. 1: einen schematischen Teilschnitt durch ein mittels eines Ausführungsbeispiels eines erfindungsgemäß ausgestalteten Ausrichtelements in einem Zylinderkopf einer Brennkraftmaschine fixierten Brennstoffeinspritzventils,
- Fig. 2: eine schematische Aufsicht auf das in Fig. 1 dargestellte Ausführungsbeispiel eines erfindungsgemäß ausgestalteten Ausrichtelements mit einer ersten Befestigungsmöglichkeit, und
- Fig. 3: einen Ausschnitt aus Fig. 2 aus dem Ausführungsbeispiel eines erfindungsgemäß ausgestalteten Ausrichtelements mit einer zweiten Befestigungsmöglichkeit.

### Beschreibung des Ausführungsbeispiels

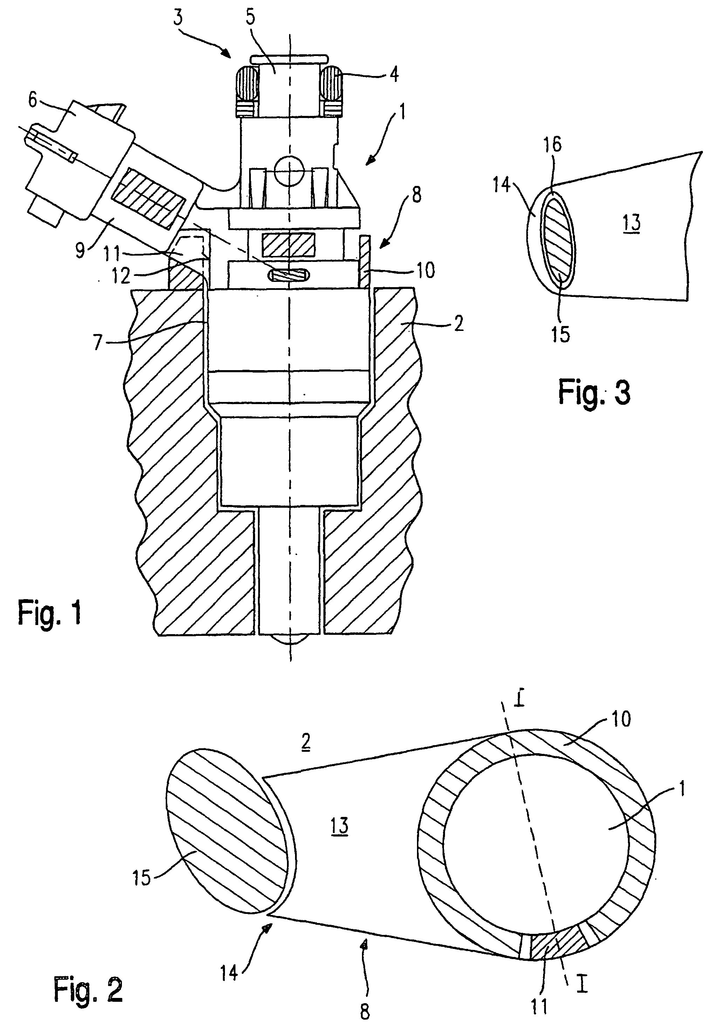

Fig. 1 zeigt einen schematisierten und vereinfachten Teilschnitt durch ein Brennstoffeinspritzventil 1, welches mittels eines bevorzugten Ausführungsbeispiels eines erfindungsgemäß ausgestalteten Ausrichtelements 8 in einem Zylinderkopf 2 einer Brennkraftmaschine gegen Verdrehen gesichert ist.

Ein Brennstoffeinspritzventil 1 ist dabei in Form eines direkt einspritzenden Brennstoffeinspritzventils 1 ausgeführt, das zum direkten Einspritzen von Brennstoff in einen Brennraum einer nicht weiter dargestellten gemischverdichtenden, fremdgezündeten Brennkraftmaschine in einen Zylinderkopf 2 eingebaut ist. Das Brennstoffeinspritzventil 1 weist an einem zulaufseitigen Ende 3 eine Steckverbindung zu einer nicht dargestellten Brennstoffverteilerleitung auf, die durch eine Dichtung 4 zwischen der Brennstoffverteilerleitung und einem Zuleitungsstutzen 5 des Brennstoffeinspritzventils 1 abgedichtet ist. Das Brennstoffeinspritzventil 1 verfügt über einen elektrischen Anschluß 6 für die elektrische Kontaktierung zur Betätigung des Brennstoffeinspritzventils 1. Das Brennstoffeinspritzventil 1 ist zumindest in seinem den Zylinderkopf 2 überragenden Teil mit einer Kunststoffumspritzung 9 versehen, welche auch den elektrischen Anschluß 6 umgibt.

Um das in einer Aufnahmebohrung 7 des Zylinderkopfes 2 mittels einer nicht weiter dargestellten Befestigungsvorrichtung, beispielsweise einer Spannpratze, fixierte Brennstoffeinspritzventil 1 gegen ein Verdrehen zu sichern, ist erfindungsgemäß ein Ausrichtelement 8 vorgesehen. Das Ausrichtelement 8 besteht aus einem Ring 10, welcher im bevorzugten Ausführungsbeispiel zumindest einen Zapfen 11 aufweist, der zur Fixierung des Rings 10 an der Kunststoffumspritzung 9 dient. Der zumindest eine Zapfen 11 greift in eine entsprechende Ausnehmung 12 der Kunststoffumspritzung 9 ein, wodurch der auf das Brennstoffeinspritzventil 1 aufgesteckte Ring 10 mit diesem lösbar verbunden ist.

Eine ebenfalls an dem Ring 10 ausgebildete Lasche 13 erstreckt sich parallel zur Oberfläche des Zylinderkopfes 2 zu einer als Widerlager geeigneten Struktur, welche fest mit dem Zylinderkopf 2 verbunden ist. Im Ausführungsbeispiel handelt es sich dabei um einen Dorn 15 der nicht näher dargestellten Befestigungsvorrichtung, welche beispielsweise in Form einer Spannpratze ausgeführt sein kann. Die Lasche 13 wirkt dabei als Hebelarm, der eine zuverlässige Sicherung des Brennstoffeinspritzventils 1 gegen Verdrehen in seiner Einbaulage im Zylinderkopf 2 erlaubt.

Der zumindest eine Zapfen 11 kann zudem asymmetrisch in Bezug auf die Position der Lasche 13 auf dem Umfang des Rings 10 angeordnet sein, so daß die Montageposition des Ausrichtelements 8 eindeutig definiert ist. Diese Maßnahme ist aus der Aufsicht auf das Ausrichtelement 8 in Fig. 2 ersichtlich, in welcher der Ring 10 mit der sich radial nach außen erstreckenden Lasche 13 dargestellt ist. Dadurch kann sichergestellt werden, daß das Ausrichtelement 8 bei der Montage in der richtigen Orientierung auf das Brennstoffeinspritzventil 1 aufgesteckt wird.

Zudem ist die Lasche 13 an einem dem Ring 10 abgewandten Ende 14 zur Vermeidung eines Abrutschens von dem als Widerlager dienenden Dorn 15 asymmetrisch gestaltet, so daß sie nicht zwischen dem Dorn 15 und dem Brennstoffeinspritzventil 1 auswandern kann. Dies kann beispielsweise durch eine den Dorn 15 teilweise umgreifende Kontur des Endes 14 der Lasche 13 erzielt werden. Das Brennstoffeinspritzventil 1 ist somit nach Einrasten des Zapfens 11 in der Ausnehmung 12 am Brennstoffeinspritzventil 1 und des Endes 14 der Lasche 13 am Dorn 15 mit geringfügigen Toleranzen am Verdrehen gehindert, wodurch am Brennstoffeinspritzventil 1 angesteckte Kabel- und Leitungsverbindungen nicht mehr der Gefahr des Abscherens ausgesetzt sind.

Die Fixierung des Ausrichtelements 8 am Zylinderkopf 2 kann beispielsweise auch mittels des Dorns 15 direkt erfolgen, indem dieser durch eine entsprechende Öffnung 16 in der Lasche in den Zylinderkopf 2 eingeschraubt wird, wie in Fig. 3 auszugsweise dargestellt. Zur Montage des Ausrichtelements 8 wird diese zunächst auf das Brennstoffeinspritzventil 1 aufgesteckt, dieses dann im Zylinderkopf 2 montiert und anschließend der Dorn 15 der Spannpratze durch die Öffnung 16 in den Zylinderkopf 2 eingeschraubt, so daß die Befestigung des Brennstoffeinspritzventils 1 und dessen Sicherung gegen Verdrehen gleichzeitig erfolgen.

Die Erfindung ist nicht auf das dargestellte Ausführungsbeispiel beschränkt und beispielsweise auch für Brennstoffeinspritzventile 1 zur Einspritzung in den Brennraum einer selbstzündenden Brennkraftmaschine anwendbar.

## Patentansprüche

1. Ausrichtelement zur Sicherung eines Brennstoffeinspritzventils (1) zum direkten Einspritzen von Brennstoff in den Brennraum einer Brennkraftmaschine an einem Zylinderkopf (2) der Brennkraftmaschine,
**dadurch gekennzeichnet,**
**daß** das Ausrichtelement (8) einen Ring (10) umfaßt, der auf das Brennstoffeinspritzventil (1) aufgesteckt ist, wobei an dem Ring (10) zumindest ein zapfen (11) vorgesehen ist, welcher an dem auf das Brennstoffeinspritzventil (1) aufgesteckten Ring (10) so angeordnet ist, daß er in eine Ausnehmung (12) in einer Kunststoffumspritzung (9) des Brennstoffeinspritzventils (1) einrastbar ist.

2. Ausrichtelement nach Anspruch 1,
**dadurch gekennzeichnet,**
**daß** die Ausnehmung (12) im Bereich eines elektrischen Anschlusses (6) des Brennstoffeinspritzventils (1) ausgebildet ist.

3. Ausrichtelement nach Anspruch 1 oder 2,
**dadurch gekennzeichnet,**
**daß** eine als flaches Bauteil ausgebildete Lasche (13) an dem Ring (10) vorgesehen ist.

4. Ausrichtelement nach Anspruch 3,
**dadurch gekennzeichnet,**
**daß** die Lasche (13) mit einem dem Ring (10) abgewandten Ende (14) an einem als Widerlager fungierenden Dorn (15) einer Befestigungsvorrichtung anliegt.

5. Ausrichtelement nach Anspruch 4,
**dadurch gekennzeichnet,**
**daß** das dem Ring (10) abgewandte Ende (14) der Lasche (13) den Dorn (15) zumindest teilweise umgreift.

6. Ausrichtelement nach einem der Ansprüche 4 bis 5,
**dadurch gekennzeichnet,**
**daß** der zumindest eine Zapfen (11) des Rings (10) und die Lasche (13) in Bezug auf einen Umfang des Rings (10) asymmetrisch angeordnet sind.

7. Ausrichtelement nach Anspruch 4,
**dadurch gekennzeichnet,**
**daß** die Lasche (13) von dem Dorn (15) durch eine Öffnung (16) durchgriffen ist.

8. Ausrichtelement nach einem der Ansprüche 3 bis 7,
**dadurch gekennzeichnet,**
**daß** der Ring (10) mit der Lasche (13) einstückig ausgebildet ist.

9. Ausrichtelement nach einem der Ansprüche 3 bis 8,
**dadurch gekennzeichnet,**
**daß** das aus dem Ring (10) mit dem Zapfen (11) und der Lasche (13) bestehende Ausrichtelement (8) mittels Stanzen und Biegen aus einem Blech herstellbar ist.

10. Ausrichtelement nach einem der Ansprüche 3 bis 7,
**dadurch gekennzeichnet,**
**daß** die Lasche (13) mittels Schweißen oder Löten mit dem Ring (10) verbunden ist.

## Claims

1. Aligning element for securing a fuel injection valve (1) for the direct injection of fuel into the combustion chamber of an internal combustion engine on a cylinder head (2) of the internal combustion engine, **characterized in that** the aligning element (8) comprises a ring (10) which is fitted onto the fuel injection valve (1), at least one journal (11) being provided on the ring (10), which journal (11) is arranged in such a way on the ring (10) which is fitted onto the fuel injection valve (1) that it can be latched into a recess (12) in a moulded plastic casing (9) of the fuel injection valve (1).

2. Aligning element according to Claim 1, **characterized in that** the recess (12) is formed in the region of an electrical connection (6) of the fuel injection valve (1).

3. Aligning element according to Claim 1 or 2, **characterized in that** a bracket (13) which is formed as a flat component is provided on the ring (10).

4. Aligning element according to Claim 3, **characterized in that** one end (14) of the bracket (13) facing away from the ring (10) is in contact with a mandrel (15) of a fastening apparatus, which mandrel (15) functions as an abutment.

5. Aligning element according to Claim 4, **characterized in that** the end (14) of the bracket (13) facing away from the ring (10) reaches around the mandrel (15) at least partially.

6. Aligning element according to either of Claims 4 and 5, **characterized in that** the at least one journal (11) of the ring (10) and the bracket (13) are arranged asymmetrically in relation to a circumference of the ring (10).

7. Aligning element according to Claim 4, **characterized in that** the mandrel (15) reaches through an opening (16) in the bracket (13).

8. Aligning element according to one of Claims 3 to 7, **characterized in that** the ring (10) and the bracket (13) are of one-piece design.

9. Aligning element according to one of Claims 3 to 8, **characterized in that** the aligning element (8) which comprises the ring (10) with the journal (11) and the bracket (13) can be manufactured from a metal sheet by means of punching and bending.

10. Aligning element according to one of Claims 3 to 7, **characterized in that** the bracket (13) is connected to the ring (10) by means of welding or soldering.

## Revendications

1. Elément d'ajustage pour fixer un injecteur de carburant (1) d'injection directe de carburant dans la chambre de combustion d'un moteur à combustion interne sur la culasse (2) du moteur,
**caractérisé en ce que**
l'élément d'ajustement (8) comprend un anneau (10) engagé sur l'injecteur (1),
l'anneau (10) ayant au moins une pièce en saillie (11) prévue sur l'anneau (10) engagé sur l'injecteur (1) de façon à s'accrocher dans une cavité (12) dans l'enrobage de matière plastique (9) de l'injecteur (1).

2. Elément d'ajustage selon la revendication 1,
**caractérisé en ce que**
la cavité (12) est réalisée au niveau du connecteur électrique (6) de l'injecteur (1).

3. Elément d'ajustage selon la revendication 1 ou 2,
**caractérisé en ce que**
l'anneau (10) comporte une pièce plate réalisée en forme de patte (13).

4. Elément d'ajustage selon la revendication 3,
**caractérisé en ce que**
la patte (13) s'appuie par l'extrémité (14) à l'opposé de l'anneau (10) contre une broche (15) fonctionnant comme appui et appartenant à un dispositif de fixation.

5. Elément d'ajustage selon la revendication 4,
**caractérisé en ce que**
l'extrémité (14) de la patte (13), à l'opposé de l'anneau (10), entoure au moins partiellement la broche (15).

6. Elément d'ajustage selon l'une des revendications 4 et 5,
**caractérisé en ce qu'**
au moins la partie en saillie (11) de l'anneau (10) et la patte (13) sont disposées de manière asymétrique par rapport à la périphérie de l'anneau (10).

7. Elément d'ajustage selon la revendication 4,
**caractérisé en ce que**
la patte (13) est traversée par la broche (15) passant dans une ouverture (16).

8. Elément d'ajustage selon l'une des revendications 3 à 7,
**caractérisé en ce que**
l'anneau (10) fait corps avec la patte (13).

9. Elément d'ajustage selon l'une des revendications 3 à 8,
**caractérisé en ce que**
l'élément d'ajustage (8), formé de l'anneau (10) et de la partie en saillie (11) ainsi que de la patte (13), est fabriqué par emboutissage et cintrage d'une pièce en tôle.

10. Elément d'ajustage selon l'une des revendications 3 à 7,
**caractérisé en ce que**
la patte (13) est reliée à l'anneau (10) par soudage ou brasage.
